# EUROPEAN PATENT SPECIFICATION

(11) **EP 2 623 872 B1**
(45) Date of publication and mention of the grant of the patent: **22.04.2020**
(21) Application number: 13153639.3
(22) Date of filing: 01.02.2013
(51) Int. Cl.: F28F 9/26, F28D 1/053, F28F 27/02, F25B 39/02, F28D 1/04, F24F 1/14

(54) **Heat exchanger and air conditioner comprising the same**
Wärmetauscher und Klimaanlage damit
Échangeur de chaleur et climatiseur comprenant celui-ci

(30) Priority: 03.02.2012 KR 20120011309
(43) Date of publication of application: 07.08.2013
(73) Proprietor: LG Electronics, Inc., Seoul 150-721 (KR)
(72) Inventor: Song, Chiwoo, 153-023 Seoul (KR); Sa, Yongcheol, 153-023 Seoul (KR)
(74) Representative: Vossius & Partner Patentanwälte Rechtsanwälte mbB

(56) References cited:
- WO-A1-2006/083484
- DE-A1-102007 017 808
- US-B1- 6 341 648

## Description

The present disclosure relates to a heat exchanger and an air conditioner, more particularly, to a heat exchanger in which the passage of a refrigerant is varied in an air cooling operation and an air heating operation.

In general, an air conditioner is an apparatus configured to include a compressor, an outdoor heat exchanger, an expansion valve, and an indoor heat exchanger, to cool or heat the interior of a room using a refrigerating cycle. That is, the air conditioner may include a cooler for cooling the interior of a room and a heater for heating the interior of a room. The air conditioner may also be formed in a combination cooling and heating air conditioner for cooling or heating the interior of a room. A heat exchanger according to the preamble of claim 1 is disclosed in document WO 2006/083484 A1.

If the air conditioner is formed in the combination cooling and heating air conditioner, the air conditioner further includes a 4-way valve for changing the passage of a refrigerant, compressed by the compressor, depending on an air cooling operation or an air heating operation. That is, in the air cooling operation, the 4-way valve is controlled by a controller such that the refrigerant compressed by the compressor flows through the 4-way valve into the outdoor heat exchanger, and the outdoor heat exchanger functions as a condenser. Next, the refrigerant condensed by the outdoor heat exchanger is expanded by the expansion valve, and the expanded refrigerant flows into the indoor heat exchanger. In this case, the indoor heat exchanger functions as an evaporator. Next, the refrigerant evaporated by the indoor heat exchanger flows into the compressor through the 4-way valve.

Meanwhile, in the air heating operation, the 4-way valve is controlled such that the refrigerant compressed by the compressor flows through the 4-way valve into the indoor heat exchanger, and the indoor heat exchanger functions as a condenser. Next, the refrigerant condensed by the indoor heat exchanger is expanded by the expansion valve, and the expanded refrigerant flows into the outdoor heat exchanger. In this case, the outdoor heat exchanger functions as an evaporator. Next, the refrigerant evaporated by the outdoor heat exchanger flows into the compressor through the 4-way valve.

One object is to provide a heat exchanger and an air conditioner in which the passage of a refrigerant is varied in an air cooling operation and an air heating operation.

Another object is to provide a heat exchanger and an air conditioner which efficiently performs a defrosting operation of removing frost generated in the heat exchanger.

Objects to be achieved are not limited to the above-mentioned objects, and other objects that have not been described above will be evident to those skilled in the art from the following description.

In accordance with an embodiment of the present invention, there is provided a heat exchanger for an air conditioner including a compressor to function as a condenser in an air cooling operation and to function as an evaporator in an air heating operation, the heat exchanger comprising, a first header pipe to have a refrigerant, compressed by a compressor, to flow therein in the air cooling operation; a first heat exchange unit coupled to the first header pipe to receive the refrigerant flowing in the first header pipe and to thermally exchange the refrigerant with air in the air cooling operation; a bypass pipe to have the refrigerant, thermally exchanged in the first heat exchange unit, to flow therein in the air cooling operation; a second header pipe to have the refrigerant, passed through the bypass pipe, to flow therein in the air cooling operation; a second heat exchange unit coupled to the second header pipe to receive the refrigerant flowing in the second header pipe and to thermally exchange the refrigerant with air in the air cooling operation; a hot gas pipe configured to couple the first header pipe and the second header pipe; and a hot gas valve disposed in the hot gas pipe and configured to control a flow of the refrigerant.

The first header pipe is coupled to the second header pipe, and the heat exchanger further comprises a check valve disposed in the first header pipe to prevent the refrigerant from flowing from the first header pipe to the second header pipe in the air cooling operation.

The second heat exchange unit may be disposed beneath the first heat exchange unit.

The heat exchanger further comprises a bypass valve disposed in the bypass, and the bypass valve is opened in the air cooling operation. In a defrosting operation, the bypass valve is closed, the hot gas valve is opened, the refrigerant compressed by the compressor may flow in the first header pipe, a part of the refrigerant flowed in the first header pipe may flow in the hot gas valve, and the refrigerant passed through the hot gas valve may flow in the second header pipe.

The heat exchanger possibly further comprises, a first distribution pipe coupled to the bypass pipe, a second distribution pipe configured to have the refrigerant, thermally exchanged in the second heat exchange unit, to pass therethrough in the air cooling operation, a first expansion valve to control a flow of the refrigerant through the first distribution pipe and a second expansion valve to control a flow of the refrigerant through the second distribution pipe, wherein the first expansion valve may be closed in the air cooling operation, and the second expansion valve may be opened in the air cooling operation.

In accordance with another embodiment of the present invention, there is provided an air conditioner comprising, a compressor; an outdoor heat exchanger; an indoor heat exchanger; and a 4-way valve guiding the refrigerant compressed by the compressor to the outdoor heat exchanger in an air cooling operation and guiding the compressed refrigerant to the indoor heat exchanger in an air heating operation, wherein the outdoor heat exchanger comprises the features of appended claims 1 to 3.

Details of other embodiments are included in the detailed description and drawings.

The above and other objects and features of the present disclosure will become apparent from the following description of some embodiments given in conjunction with the accompanying drawings, in which:
FIG. 1 shows the construction of an air conditioner according to an embodiment of the present invention;
FIGS. 2 and 3 show the constructions of outdoor heat exchangers and flow of a refrigerant in an air cooling operation and in an air heating operation according to embodiments of the present invention; and
FIG. 4 is a diagram showing the flow of a refrigerant in the defrosting operation of the outdoor heat exchanger according to an embodiment of the present invention.

Merits and characteristics of the present disclosure and methods for achieving them will become more apparent from the following embodiments taken in conjunction with the accompanying drawings. However, the present invention is not limited to the disclosed embodiments, but may be implemented in various ways within the scope of the appended claims. The embodiments are provided for complete disclosure and to allow those having ordinary skill in the art to fully understand the principles of the present invention. The same reference numbers may be used throughout the drawings to refer to the same or like parts.

Hereinafter, embodiments of the present invention will be described in detail with reference to the accompanying drawings for describing an outdoor heat exchanger.

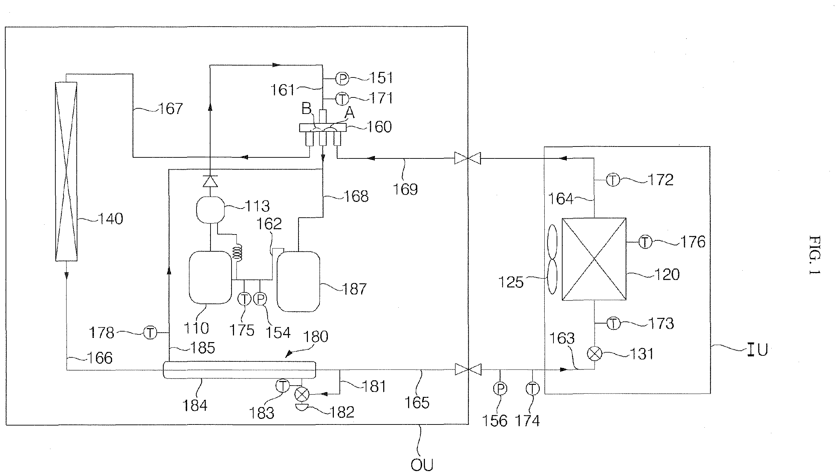

FIG. 1 shows the construction of an air conditioner according to an embodiment of the present invention.

The air conditioner according to the embodiment of the present invention includes an outdoor unit OU and an indoor unit IU.

The outdoor unit OU includes a compressor 110, an outdoor heat exchanger 140, and a supercooler 180. The air conditioner may include one or a plurality of the outdoor units OU.

The compressor 110 compresses a refrigerant of a low temperature and low pressure into a refrigerant of a high temperature and high pressure. The compressor 110 may have various structures, and an inverter type compressor or a constant speed compressor may be adopted as the compressor 110. A discharge temperature sensor 171 and a discharge pressure sensor 151 are installed on a discharge pipe 161 of the compressor 110. Furthermore, a suction temperature sensor 175 and a suction pressure sensor 154 are installed on a suction pipe 162 of the compressor 110.

The outdoor unit OU is illustrated as including one compressor 110, but the present invention is not limited thereto. The outdoor unit OU may include a plurality of the compressors and may include both an inverter type compressor and a constant speed compressor.

An accumulator 187 may be installed in the suction pipe 162 of the compressor 110 in order to prevent a refrigerant of a liquid state from entering the compressor 110. An oil separator 113 for collecting oil from the refrigerant discharged from the compressor 110 may be installed in the discharge pipe 161 of the compressor 110.

A 4-way valve 160 is a passage switch valve that switches for cooling operation and heating operation. The 4-way valve 160 may be controlled by a controller. The 4-way valve 160 guides the refrigerant compressed by the compressor 110 to the outdoor heat exchanger 140 in an air cooling operation and guides the compressed refrigerant to an indoor heat exchanger 120 in an air heating operation. The 4-way valve 160 is in an A state in the air cooling operation and is in a B state in the air heating operation.

The outdoor heat exchanger 140 is disposed in an outdoor space, and the refrigerant passing through the outdoor heat exchanger 140 is thermally exchanged with outdoor air at the outdoor heat exchanger 140. The outdoor heat exchanger 140 functions as a condenser in an air cooling operation and functions as an evaporator in an air heating operation.

The outdoor heat exchanger 140 is coupled to a first inflow pipe 166, which is coupled to the indoor unit IU through a liquid pipe 165. The outdoor heat exchanger 140 is coupled to a second inflow pipe 167, which is coupled to the 4-way valve 160.

The supercooler 180 includes a supercooling heat exchanger 184, a second bypass pipe 181, a supercooling expansion valve 182, and a discharge pipe 185. The supercooling heat exchanger 184 is disposed on the first inflow pipe 166. In an air cooling operation, the second bypass pipe 181 functions to bypass the refrigerant discharged from the supercooling heat exchanger 184 so that the discharged refrigerant flows in the supercooling expansion valve 182.

The supercooling expansion valve 182 is disposed on the second bypass pipe 181. The supercooling expansion valve 182 lowers the pressure and temperature of a refrigerant by constricting the refrigerant of a liquid state that flows in the second bypass pipe 181 and then forces the refrigerant to flow into the supercooling heat exchanger 184. The supercooling expansion valve 182 may be various types, and a linear expansion valve may be used as the supercooling expansion valve 182 in this embodiment. The supercooling expansion valve 182 may be controlled by the controller. A supercooling temperature sensor 183 for detecting temperature of the refrigerant constricted by the supercooling expansion valve 182 is installed on the second bypass pipe 181.

In an air cooling operation, a condensed refrigerant passing through the outdoor heat exchanger 140 is super-cooled through a thermal exchange with a refrigerant of low temperature, introduced through the second bypass pipe 181, in the supercooling heat exchanger 184, and the super-cooled refrigerant flows into the indoor unit IU.

The refrigerant passing through the second bypass pipe 181 is thermally exchanged in the supercooling heat exchanger 184, and the thermally exchanged refrigerant flows into the accumulator 187 through the discharge pipe 185. A discharge pipe temperature sensor 178 for detecting temperature of the refrigerant entering the accumulator 187 is installed on the discharge pipe 185.

A liquid pipe temperature sensor 174 and a liquid pipe pressure sensor 156 are installed on the liquid pipe 165 which couples the supercooler 180 and the indoor unit IU.

In the air conditioner according to the embodiment of the present invention, the indoor unit IU includes the indoor heat exchanger 120, an indoor fan 125, and an indoor expansion valve 131. The air conditioner may include one or a plurality of the indoor units IU.

The indoor heat exchanger 120 is disposed in an indoor space, and a refrigerant passing through the indoor heat exchanger 120 is thermally exchanged with indoor air at the indoor heat exchanger 120. The indoor heat exchanger 120 functions as an evaporator in an air cooling operation and functions as a condenser in an air heating operation. An indoor temperature sensor 176 for detecting indoor temperature is installed in the indoor heat exchanger 120.

The indoor expansion valve 131 is an apparatus for constricting an inflow refrigerant in an air cooling operation. The indoor expansion valve 131 is installed in the indoor inlet pipe 163 of the indoor unit IU. The indoor expansion valve 131 may be various types, and a linear expansion valve may be used as the indoor expansion valve 131, in this embodiment. The indoor expansion valve 131 may be controlled by the controller. It is preferred that the indoor expansion valve 131 be opened in a set opening degree in an air cooling operation and be fully opened in an air heating operation.

An indoor inlet pipe temperature sensor 173 is installed on the indoor inlet pipe 163. The indoor inlet pipe temperature sensor 173 may be installed between the indoor heat exchanger 120 and the indoor expansion valve 131. Furthermore, an indoor outlet pipe temperature sensor 172 is installed on the indoor outlet pipe 164.

In the air cooling operation of the above-described air conditioner, the flow of a refrigerant is described below.

A refrigerant of a high temperature and high pressure and in a gaseous state, discharged from the compressor 110, flows into the outdoor heat exchanger 140 through the 4-way valve 160 and the second inflow pipe 167. The refrigerant is thermally exchanged with outdoor air at the outdoor heat exchanger 140, and thus the refrigerant is condensed. The refrigerant drained from the outdoor heat exchanger 140 flows into the supercooler 180 through the first inflow pipe 166. Next, the refrigerant is super-cooled by the supercooling heat exchanger 184, and the super-cooled refrigerant flows into the indoor unit IU.

A part of the refrigerant super-cooled by the supercooling heat exchanger 184 is constricted by the supercooling expansion valve 182, so that the refrigerant passing through the supercooling heat exchanger 184 is super-cooled. The refrigerant super-cooled by the supercooling heat exchanger 184 flows into the accumulator 187.

The refrigerant flowing into the indoor unit IU is constricted by the indoor expansion valve 131 opened by a set opening degree and is then thermally exchanged with indoor air at the indoor heat exchanger 120, thus being evaporated. The evaporated refrigerant flows into the compressor 110 through the 4-way valve 160 and the accumulator 187.

In the air heating operation of the above-described air conditioner, the flow of a refrigerant is described below.

A refrigerant of a high temperature and high pressure and in a gaseous state, discharged from the compressor 110, flows into the indoor unit IU through the 4-way valve 160. Here, the indoor expansion valves 131 of the indoor units IU are fully opened. The refrigerant drained from the indoor unit IU flows into the outdoor heat exchanger 140 through the first inflow pipe 166. Next, the refrigerant is thermally exchanged with outdoor air at the outdoor heat exchanger 140, thus being evaporated. The evaporated refrigerant flows into the suction pipe 162 of the compressor 110 through the 4-way valve 160 and the accumulator 187 through the second inflow pipe 167.

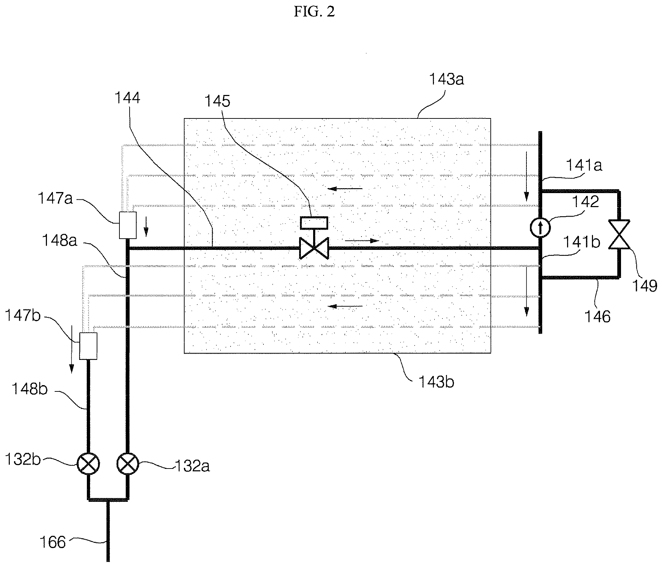

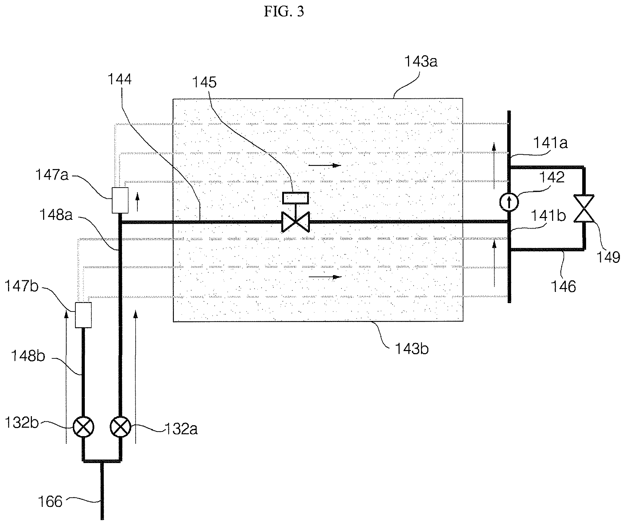

FIGS. 2 and 3 show the constructions of outdoor heat exchangers and flow of a refrigerant in an air cooling operation and in an air heating operation according to embodiments of the present invention.

The outdoor heat exchanger 140 according to an embodiment of the present invention includes a first header pipe 141a configured to have a refrigerant, compressed by the compressor in an air cooling operation, flowed therein, a first heat exchange unit 143a coupled to the first header pipe 141a and configured to thermally exchange a refrigerant with air, a bypass pipe 144 configured to have a refrigerant, thermally exchanged in the first heat exchange unit 143a in an air cooling operation, passing therethrough, a first distribution pipe 148a coupled to the bypass pipe 144, a second header pipe 141b configured to have a refrigerant, passing through the bypass pipe 144 in an air cooling operation, flowed therein, a second heat exchange unit 143b coupled to a second header pipe 141b and configured to thermally exchange a refrigerant with air, a second distribution pipe 148b configured to have a refrigerant, thermally exchanged in the second heat exchange unit 143b in an air cooling operation, passing therethrough, a hot gas pipe 146 configured to couple the first header pipe 141a and the second header pipe 141b, and a hot gas valve 149 disposed in the hot gas pipe 146, which opens or closes in order to control the flow of a refrigerant. The hot gas valve 149 may be controlled by the controller.

The first header pipe 141a has one end coupled to the second inflow pipe 167, and thus coupled to the compressor 110. The first header pipe 141a has the other end coupled to the bypass pipe 144 and the second header pipe 141b. A check valve 142 is disposed at the other end of the first header pipe 141a. The check valve 142 controls the flow direction of a refrigerant so that the refrigerant from the first header pipe 141a is prevented from entering the second header pipe 141b and the refrigerant flows from the second header pipe 141b to the first header pipe 141a.

The first header pipe 141a is coupled to one end of the first heat exchange unit 143a. The first header pipe 141a is coupled to the plurality of refrigerant tubes of the first heat exchange unit 143a. That is, the first header pipe 141a is branched into the plurality of refrigerant tubes of the first heat exchange unit 143a.

The first heat exchange unit 143a has one end coupled to the first header pipe 141a and has the other end coupled to a first distributor 147a. The first heat exchange unit 143a includes a plurality of refrigerant tubes and a plurality of electric heat pins in which a refrigerant flows, and thus thermally exchanges the refrigerant with air. One ends of the plurality of refrigerant tubes of the first heat exchange unit 143a are merged into the first header pipe 141a, and the other ends thereof are merged into the first distributor 147a.

The first distributor 147a couples the other end of the first heat exchange unit 143a with the first distribution pipe 148a. The plurality of refrigerant tubes of the first heat exchange unit 143a are merged and coupled to the first distributor 147a.

The first distribution pipe 148a is coupled to the first distributor 147a. The first distribution pipe 148a is coupled to the other end of the first heat exchange unit 143a through the first distributor 147a. The first distribution pipe 148a is coupled to the first inflow pipe 166. The first distribution pipe 148a and the second distribution pipe 148b are merged into the first inflow pipe 166.

A first expansion valve 132a for controlling the degree of opening of the first distribution pipe 148a is disposed in the first distribution pipe 148a. The first expansion valve 132a may be controlled by the controller. The first expansion valve 132a may constrict, pass, or block a refrigerant passing through the first distribution pipe 148a. In an air cooling operation, the first expansion valve 132a is closed. In an air heating operation, the degree of opening of the first expansion valve 132a is controlled in order to constrict a refrigerant. In a defrosting operation, the first expansion valve 132a is opened.

The bypass pipe 144 has one end coupled to the first distribution pipe 148a and has the other end coupled to the second header pipe 141b. A bypass valve 145 for controlling the flow of a refrigerant is disposed in the bypass pipe 144. The bypass valve 144 may be controlled by the controller. In an air cooling operation, the bypass valve 145 may be opened so that a refrigerant flows from the first distributor 147a to the second header pipe 141b. In an air heating operation and a partial defrosting operation, the bypass valve 145 may be closed so that a refrigerant is prevented from flowing from the second header pipe 141b to the first distributor 147a.

In accordance with an embodiment, the bypass pipe 144 may be coupled to the first distributor 147a or may be coupled to the other end of the first heat exchange unit 143a.

The second header pipe 141b is coupled to the bypass pipe 144 and the first header pipe 141a. The second header pipe 141b is coupled to one end of the second heat exchange unit 143b. The second header pipe 141b is coupled to a plurality of refrigerant tubes of the second heat exchange unit 143b. That is, the second header pipe 141b is branched into the plurality of refrigerant tubes of the second heat exchange unit 143b.

The second heat exchange unit 143b has one end coupled to the second header pipe 141b and has the other end coupled to the second distributor 147b. The second heat exchange unit 143b includes the plurality of refrigerant tubes and the plurality of electric heat pins in which a refrigerant flows and thermally exchanges the refrigerant with air. One ends of the plurality of refrigerant tubes of the second heat exchange unit 143b are merged into the second header pipe 141b, and the other ends thereof are merged into the second distributor 147b.

The second heat exchange unit 143b is disposed beneath the first heat exchange unit 143a. That is, the first heat exchange unit 143a and the second heat exchange unit 143b may be vertically disposed, and they may share the plurality of electric heat pins.

The second distributor 147b couples the other end of the second heat exchange unit 143b with the second distribution pipe 148b. The plurality of refrigerant tubes of the second heat exchange unit 143b are merged and coupled to the second distributor 147b.

The second distribution pipe 148b is coupled to a second distributor 147b. The second distribution pipe 148b is coupled to the other end of the second heat exchange unit 143b through the second distributor 147b. The second distribution pipe 148b is merged with the first distribution pipe 148a and then coupled to the first inflow pipe 166.

A second expansion valve 132b for controlling the degree of opening of the second distribution pipe 148b is disposed in the second distribution pipe 148b. The second expansion valve 132b may be controlled by the controller. The second expansion valve 132b may constrict, pass, or block a refrigerant passing through the second distribution pipe 148b. In an air cooling operation and a defrosting operation, the second expansion valve 132b is opened. In an air heating operation, the degree of opening of the second expansion valve 132b is controlled in order to constrict a refrigerant.

The hot gas pipe 146 couples the first header pipe 141a and the second header pipe 141b. The hot gas pipe 146 is branched from the second inflow pipe 167 to the first header pipe 141a.

The hot gas pipe 146 is coupled to the second header pipe 141b. It is preferred that the hot gas pipe 146 be coupled to a point where the first header pipe 141a is coupled in the second header pipe 141b. That is, it is preferred that the hot gas pipe 146 be coupled to a point where the second header pipe 141b and the bypass pipe 144 are coupled.

The hot gas valve 149, which opens or closes in order to control the flow of a refrigerant is disposed in the hot gas pipe 146. In an air cooling operation, the hot gas valve 149 is closed. In a defrosting operation, the hot gas valve 149 is opened so that a refrigerant can flow from the first header pipe 141a to the second header pipe 141b. In an air heating operation, the hot gas valve 149 may be opened or closed.

In accordance with an embodiment, an auxiliary valve (not shown), which opens or closes in order to control the flow of a refrigerant may be disposed in the second header pipe 141b. The auxiliary valve may be controlled by the controller. It is preferred that the auxiliary valve be disposed at a point where the bypass pipe 144 is coupled in the second header pipe 141b. In an air cooling operation and an air heating operation, the auxiliary valve is opened. In a defrosting operation, the auxiliary valve is closed so that a refrigerant flowing through the second header pipe 141b is prevented from flowing in the bypass pipe 144.

In the air cooling operation of the above-described outdoor heat exchanger, the flow of a refrigerant is described below with reference to FIG. 2.

A refrigerant compressed by the compressor 110 flows in the first header pipe 141a through the second inflow pipe 167. The check valve 142 prevents the refrigerant flowing in the first header pipe 141a from flowing into the second header pipe 141b. In the air cooling operation, the hot gas valve 149 is closed, and thus the refrigerant flowing in the first header pipe 141a flows into the first heat exchange unit 143a.

The refrigerant flowing in the first heat exchange unit 143a is condensed through a thermal exchange with air. The refrigerant condensed by the first heat exchange unit 143a flows into the first distribution pipe 148a through the first distributor 147a. In an air cooling operation, the first expansion valve 132a is closed. Thus, the refrigerant flowing in the first distribution pipe 148a does not flow into the first inflow pipe 166, but flows into the bypass pipe 144.

In an air cooling operation, the bypass valve 145 is opened so that the refrigerant passing through the bypass pipe 144 flows into the second header pipe 141b. The refrigerant flowing in the second header pipe 141b flows into the second heat exchange unit 143b.

The refrigerant flowing in the second heat exchange unit 143b is condensed again through a thermal exchange with air. The refrigerant condensed by the second heat exchange unit 143b flows into the second distribution pipe 148b through the second distributor 147b. In an air cooling operation, the second expansion valve 132b is fully opened. Thus, the refrigerant flowing in the first inflow pipe 166 flows into the indoor unit IU through the first inflow pipe 166 and the liquid pipe 165.

In the air heating operation of the above-described outdoor heat exchanger, the flow of a refrigerant is described below with reference to FIG. 3.

A refrigerant condensed by the indoor heat exchanger 120 of the indoor unit IU flows into the first inflow pipe 166 through the liquid pipe 165. The refrigerant flowing in the first inflow pipe 166 flows into the first distribution pipe 148a and the second distribution pipe 148b.

The refrigerant flowing in the second distribution pipe 148b is expanded by the second expansion valve 132b having an opening degree controlled. The refrigerant expanded by the second expansion valve 132b flows into the second heat exchange unit 143b through the second distributor 147b. The refrigerant flowing in the second heat exchange unit 143b is evaporated through a thermal exchange with air. The refrigerant evaporated by the second heat exchange unit 143b flows into the second header pipe 141b.

In the air heating operation, the bypass valve 145 is closed so that the refrigerant flowing in the second header pipe 141b does not pass through the bypass pipe 144. The refrigerant flowing in the second header pipe 141b flows into the first header pipe 141a through the check valve 142. In the air cooling operation, if the hot gas valve 149 is opened, the refrigerant flowing in the second header pipe 141b may flow in the first header pipe 141a through the hot gas pipe 146.

Meanwhile, the refrigerant flowing in the first distribution pipe 148a is expanded by the first expansion valve 132a. In the air heating operation, the bypass valve 145 is closed. Thus, the refrigerant expanded by the first expansion valve 132a does not flow into the second header pipe 141b, but flows into the first heat exchange unit 143a through the first distributor 147a. The refrigerant flowing in the first heat exchange unit 143a is evaporated through a thermal exchange with air.

The refrigerant evaporated by the first heat exchange unit 143a flows into the first header pipe 141a. The refrigerant flowing in the first header pipe 141a is merged with the refrigerant passing through the second header pipe 141b. Next, the merged refrigerant flows into the second inflow pipe 167 and then flows into the compressor 110.

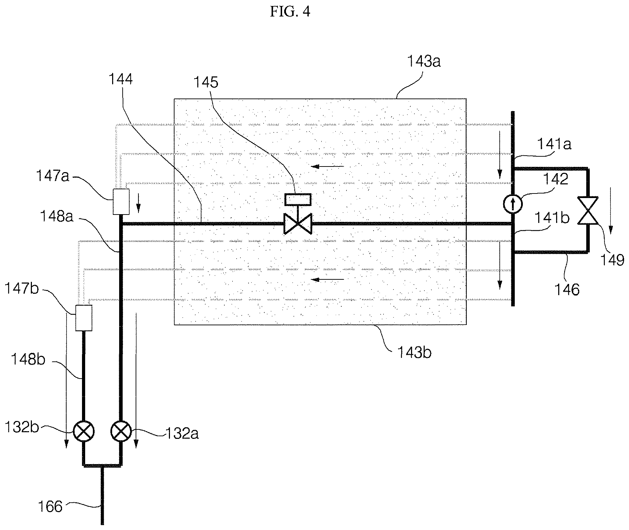

FIG. 4 is a diagram showing the flow of a refrigerant in the defrosting operation of the outdoor heat exchanger according to an embodiment of the present invention.

In an air heating operation, if outdoor temperature is very low, frost may be generated in the outdoor heat exchanger 140. In this case, a defrosting operation for removing the frost generated in the outdoor heat exchanger 140 may be performed. In this case, the flow of a refrigerant is described below.

A refrigerant compressed by the compressor 110 flows into the first header pipe 141a through the second inflow pipe 167. Furthermore, in the defrosting operation, the hot gas valve 149 is opened, so that the refrigerant compressed by the compressor 110 flows into the second header pipe 141b through the second inflow pipe 167 and the first header pipe 141a. That is, when the hot gas valve 149 is opened, a part of the refrigerant flowing in the first header pipe 141a flows into the second header pipe 141b.

The refrigerant flowing in the first header pipe 141a flows into the first heat exchange unit 143a. The refrigerant flowing in the first heat exchange unit 143a flows through the first heat exchange unit 143a and heats the first heat exchange unit 143a, thus removing frost.

After flowing through the first heat exchange unit 143a, the refrigerant flows into the first distribution pipe 148a through the first distributor 147a. In the defrosting operation, the bypass valve 145 is closed, and the first expansion valve 132a is fully opened. Accordingly, the refrigerant flowing in the first distribution pipe 148a flows into the first inflow pipe 166.

In the defrosting operation, the refrigerant flowing in the second header pipe 141b does not pass through the bypass pipe 144 because the bypass valve 145 is closed. Accordingly, the refrigerant flowing in the second header pipe 141b flows into the second heat exchange unit 143b. The refrigerant flowing in the second heat exchange unit 143b flows through the second heat exchange unit 143b and heats the second heat exchange unit 143b, thus removing frost.

After flowing through the second heat exchange unit 143b, the refrigerant flows into the second distribution pipe 148b via the second distributor 147b. In the defrosting operation, the refrigerant flowing in the second distribution pipe 148b flows into the first inflow pipe 166 because the second expansion valve 132b is fully opened.

The outdoor heat exchanger according to the embodiments of the present invention has one or more of the following advantages.

First, there is an advantage in that the passage of a refrigerant is varied in an air cooling operation and an air heating operation.

Second, there is an advantage in that the plurality of heat exchange units may be uniformly defrosted.

Third, there is an advantage in that the defrosting operation may be efficiently performed.

Effects according to embodiments of the present invention are not limited to the above-mentioned effects, and other effects that have not been described above will be evident to those skilled in the art from the following description.

The heat exchanging unit may be used in residential air conditioners, commercial air conditioners, and vehicles, such as cars and trucks. Vehicles such as electric cars and hybrid cars may take advantage of the air conditioners using the heat exchanging unit.

## Claims

1. A heat exchanger for an air conditioner including a compressor (110), the heat exchanger comprising:
a first header pipe (141a) to have a refrigerant, compressed by the compressor (110), to flow therein in the air cooling operation;
a first heat exchange unit (143a) coupled to the first header pipe (141a) to receive the refrigerant flowing in the first header pipe (141a) and to thermally exchange the refrigerant with air in the air cooling operation;
a bypass pipe (144) to have the refrigerant, thermally exchanged in the first heat exchange unit (143a), to flow therein in the air cooling operation; a bypass valve (145) disposed in the bypass pipe (144), wherein the bypass valve (145) is opened in the air cooling operation such that the refrigerant flows through the bypass pipe (144).
a second header pipe (141b) to have the refrigerant, passed through the bypass pipe (144), to flow therein in the air cooling operation;
wherein the first header pipe (141a) is coupled to the second header pipe (141b),
a check valve (142) disposed in the first header pipe (141a) to prevent the refrigerant from flowing from the first header pipe (141a) to the second header pipe (141b) in the air cooling operation; and
a second heat exchange unit (143b) coupled to the second header pipe (141b) to receive the refrigerant flowing in the second header pipe (141b) and to thermally exchange the refrigerant with air in the air cooling operation;
**characterized in that**
the heat exchanger further comprising:
a hot gas pipe (146) configured to couple the first header pipe (141a) and the second header pipe (141b); and
a hot gas valve (149) disposed in the hot gas pipe (146),
wherein, in a defrosting operation, the bypass valve (145) is closed and the hot gas valve (149) is opened such that
a part of the refrigerant which is compressed by the compressor (110) and then flows through the first header pipe (141a) is passed through the first heat exchange unit (143a), and
remaining part of the refrigerant is passed through the second heat exchange unit (143b) via the second header pipe (141b) without being passed through the bypass pipe (144) in the defrosting operation.

2. The heat exchanger of claim 1, wherein the second heat exchange unit (143b) is disposed beneath the first heat exchange unit (143a).

3. The heat exchanger of claim 1, further comprising:
a first distribution pipe (148a) coupled to the bypass pipe (144);
a second distribution pipe (148b) configured to have the refrigerant, thermally exchanged in the second heat exchange unit (143b), to pass therethrough in the air cooling operation;
a first expansion valve (132a) to control a flow of the refrigerant through the first distribution pipe (148a); and
a second expansion valve (132b) to control a flow of the refrigerant through the second distribution pipe (148b),
wherein the first expansion valve (132a) is closed in the air cooling operation, and
the second expansion valve (132b) is opened in the air cooling operation.

4. An air conditioner including the heat exchanger of any one of the claims 1 to 3 as an outdoor heat exchanger, wherein the air conditioner comprises:
a compressor (110);
an outdoor heat exchanger (140);
an indoor heat exchanger (120); and
a 4-way valve (160) guiding the refrigerant compressed by the compressor (110) to the outdoor heat exchanger in an air cooling operation and guiding the compressed refrigerant to the indoor heat exchanger (120) in an air heating operation.

## Patentansprüche

1. Wärmetauscher für eine Klimaanlage, die einen Verdichter (110) aufweist, wobei der Wärmetauscher aufweist:
eine erste Sammelleitung (141a), um ein durch den Verdichter (110) verdichtetes Kältemittel darin im Luftkühlbetrieb fließen zu lassen;
eine erste Wärmetauscheinheit (143a), die mit der ersten Sammelleitung (141a) gekoppelt ist, um das in der ersten Sammelleitung (141a) fließende Kältemittel aufzunehmen und das Kältemittel im Luftkühlbetrieb mit Luft wärmezutauschen;
eine Umgehungsleitung (144), um im Luftkühlbetrieb darin das in der ersten Wärmetauscheinheit (143a) wärmegetauschte Kältemittel fließen zu lassen;
ein in der Umgehungsleitung (144) angeordnetes Umgehungsventil (145), wobei das Umgehungsventil (145) im Luftkühlbetrieb geöffnet ist, so dass das Kältemittel durch die Umgehungsleitung (144) fließt;
eine zweite Sammelleitung (141b), um im Luftkühlbetrieb darin das durch die Umgehungsleitung (144) gegangene Kältemittel fließen zu lassen;
wobei die erste Sammelleitung (141a) mit der zweiten Sammelleitung (141b) gekoppelt ist,
ein in der ersten Sammelleitung (141a) angeordnetes Rückschlagventil (142), um zu verhindern, dass das Kältemittel im Luftkühlbetrieb aus der ersten Sammelleitung (141a) zur zweiten Sammelleitung (141b) fließt; und
eine zweite Wärmetauscheinheit (143b), die mit der zweiten Sammelleitung (141b) gekoppelt ist, um das in der zweiten Sammelleitung (141b) fließende Kältemittel aufzunehmen und das Kältemittel im Luftkühlbetrieb mit Luft wärmezutauschen;
**dadurch gekennzeichnet, dass**
der Wärmetauscher ferner aufweist:
eine Heißgasleitung (146), die konfiguriert ist, die erste Sammelleitung (141a) und die zweite Sammelleitung (141b) zu koppeln; und
ein in der Heißgasleitung (146) angeordnetes Heißgasventil (149),
wobei in einem Abtaubetrieb das Umgehungsventil (145) geschlossen ist und das Heißgasventil (149) geöffnet ist, so dass
ein Teil des Kältemittels, das durch den Verdichter (110) verdichtet wird und dann durch die erste Sammelleitung (141a) fließt, durch die erste Wärmetauscheinheit (143a) geschickt wird, und
der restliche Teil des Kältemittels im Abtaubetrieb über die zweite Sammelleitung (141b) durch die zweite Wärmetauscheinheit (143b) geschickt wird, ohne durch die Umgehungsleitung (144) geschickt zu werden.

2. Wärmetauscher nach Anspruch 1, wobei die zweite Wärmetauscheinheit (143b) unter der ersten Wärmetauscheinheit (143a) angeordnet ist.

3. Wärmetauscher nach Anspruch 1, der ferner aufweist:
eine erste Verteilungsleitung (148a), die mit der Umgehungsleitung (144) gekoppelt ist; eine zweite Verteilungsleitung (148b), die konfiguriert ist, das in der zweiten Wärmetauscheinheit (143b) wärmegetauschte Kältemittel im Luftkühlbetrieb dort hindurch strömen zu lassen;
ein erstes Expansionsventil (132a), um einen Fluss des Kältemittels durch die erste Verteilungsleitung (148a) zu steuern; und
ein zweites Expansionsventil (132b), um einen Fluss des Kältemittels durch die zweite Verteilungsleitung (148b) zu steuern,
wobei das erste Expansionsventil (132a) im Luftkühlbetrieb geschlossen ist, und
das zweite Expansionsventil (132b) im Luftkühlbetrieb geöffnet ist.

4. Klimaanlage, die den Wärmetauscher nach einem der Ansprüche 1 bis 3 als einen Außenwärmetauscher aufweist, wobei die Klimaanlage aufweist:
einen Verdichter (110);
einen Außenwärmetauscher (140);
einen Innenwärmetauscher (120); und
ein 4-Wege-Ventil (160), das das durch den Verdichter (110) verdichtete Kältemittel in einem Luftkühlbetrieb zum Außenwärmetauscher leitet und das verdichtete Kältemittel in einem Luftheizbetrieb zum Innenwärmetauscher (120) leitet.

## Revendications

1. Échangeur de chaleur pour un climatiseur doté d'un compresseur (110), ledit échangeur de chaleur comprenant :
une première conduite collectrice (141a) où circule un réfrigérant comprimé par le compresseur (110) en fonctionnement de refroidissement d'air ;
une première unité d'échange thermique (143a) reliée à la première conduite collectrice (141a) pour recevoir le réfrigérant circulant dans la première conduite collectrice (141a) et pour procéder à un échange thermique entre le réfrigérant et l'air en fonctionnement de refroidissement d'air ;
une conduite de dérivation (144) où circule le réfrigérant ayant été soumis à échange thermique dans la première unité d'échange thermique (143a) en fonctionnement de refroidissement d'air ;
une vanne de dérivation (145) montée dans la conduite de dérivation (144), ladite vanne de dérivation (145) étant ouverte en fonctionnement de refroidissement d'air, de sorte que le réfrigérant circule dans la conduite de dérivation (144) ;
une deuxième conduite collectrice (141b) où circule le réfrigérant passé par la conduite de dérivation (144) en fonctionnement de refroidissement d'air ;
la première conduite collectrice (141a) étant reliée à la deuxième conduite collectrice (141b),
un clapet antiretour (142) monté dans la première conduite collectrice (141a) pour empêcher le réfrigérant de s'écouler de la première conduite collectrice (141a) vers la deuxième conduite collectrice (141b) en fonctionnement de refroidissement d'air ; et
une deuxième unité d'échange thermique (143b) reliée à la deuxième conduite collectrice (141b) pour recevoir le réfrigérant circulant dans la deuxième conduite collectrice (141b) et procéder à un échange thermique entre le réfrigérant et l'air en fonctionnement de refroidissement d'air ;
**caractérisé en ce que**
ledit échangeur de chaleur comprend en outre :
une conduite de gaz chaud (146) prévue pour raccorder la première conduite collectrice (141a) à la deuxième conduite collectrice (141b) ; et
une vanne de gaz chaud (149) montée dans la conduite de gaz chaud (146), où, lors d'un fonctionnement de dégivrage, la vanne de dérivation (145) est fermée et la vanne de gaz chaud (149) est ouverte
de sorte qu'une partie du réfrigérant comprimé par le compresseur (110) avant de circuler dans la première conduite collectrice (141a) traverse la première unité d'échange thermique (143a), et
que la partie de réfrigérant restante traverse la deuxième unité d'échange thermique (143b) via la deuxième conduite collectrice (141b) sans passer dans la conduite de dérivation (144) en fonctionnement de dégivrage.

2. Échangeur de chaleur selon la revendication 1, où la deuxième unité d'échange thermique (143b) est disposée en dessous de la première unité d'échange thermique (143a).

3. Échangeur de chaleur selon la revendication 1, comprenant en outre :
une première conduite de distribution (148a) reliée à la conduite de dérivation (144) ;
une deuxième conduite de distribution (148b) prévue pour qu'y circule le réfrigérant ayant été soumis à échange thermique dans la deuxième unité d'échange thermique (143b), en fonctionnement de refroidissement d'air ;
une première vanne de détente (132a) pour la commande d'un débit du réfrigérant dans la première conduite de distribution (148a) ; et
une deuxième vanne de détente (132b) pour la commande d'un débit du réfrigérant dans la deuxième conduite de distribution (148b),
où la première vanne de détente (132a) est fermée en fonctionnement de refroidissement d'air, et la deuxième vanne de détente (132b) est ouverte en fonctionnement de refroidissement d'air.

4. Climatiseur, doté de l'échangeur de chaleur selon l'une des revendications 1 à 3 en tant qu'échangeur de chaleur extérieur, ledit climatiseur comprenant :
un compresseur (110) ;
un échangeur de chaleur extérieur (140) ;
un échangeur de chaleur intérieur (120) ; et
une vanne à 4 voies (160) guidant le réfrigérant comprimé par le compresseur (110) vers l'échangeur de chaleur extérieur en fonctionnement de refroidissement d'air et guidant le réfrigérant comprimé vers l'échangeur de chaleur intérieur (120) en fonctionnement de chauffage d'air.
